# EUROPÄISCHE PATENTSCHRIFT

(11) **EP 3 502 534 B1**
(45) Veröffentlichungstag und Bekanntmachung des Hinweises auf die Patenterteilung: **02.12.2020**
(21) Anmeldenummer: 17020582.7
(22) Anmeldetag: 19.12.2017
(51) Int. Cl.: F16L 33/02, F16L 55/163, F16L 55/17, H02G 3/22

(54) **VERWENDUNG EINES SPANNRINGS MIT EINEM SPANNABSCHNITT**
USE OF A TENSION RING WITH A TENSION SECTION
UTILISATION D'UNE BAGUE DE SERRAGE DOTÉE D'UNE SECTION DE SERRAGE

(43) Veröffentlichungstag der Anmeldung: 26.06.2019
(73) Patentinhaber: Hauff-Technik GmbH & Co. KG, 89568 Hermaringen (DE)
(72) Erfinder: Heck, Martin, 89447 Zöschingen (DE); Schmid, Jörg, 89129 Langenau (DE); Kurz, Ralf, 89537 Giengen (DE)
(74) Vertreter: König Szynka Tilmann von Renesse Patentanwälte Partnerschaft mbB

(56) Entgegenhaltungen:
- DE-B- 1 109 959
- US-A- 2 778 085
- US-A- 2 803 866
- US-A- 2 922 212
- US-A- 5 024 404
- US-A- 5 431 459
- US-A1- 2002 140 224
- US-A1- 2005 006 853

## Beschreibung

Die vorliegende Erfindung betrifft einen Spannring mit einem Spannabschnitt.

Ein Spannring der vorliegend in Rede stehenden Art kann bspw. bei einer Wand- oder Bodendurchführung Einsatz finden, etwa um eine weiche, flexible Hülse an ein im Verhältnis steiferes Leitungs- bzw. Rohrelement anzudrücken. Dazu lässt sich der Umfang des Spannrings durch Anziehen einer Spannschraube verändern, womit der Spannring in zur Ringachse senkrechten Richtungen angedrückt wird, um dann bspw. die Elastomer- bzw. Gummihülse mit zunehmendem Druck an das Rohrelement anzupressen. Diese Anwendung soll den vorliegenden Gegenstand illustrieren, den Erfindungsgedanken aber zunächst nicht in seiner Allgemeinheit beschränken.

Aus der DE 11 09 959 B, der US 2,778,085 A, der US 2,922,212 A, der US 2,803,866 A und der US 5,024,404 A sind Spannringe bekannt, die zum Andrücken nach radial innen genutzt werden, also als Rohrschellen.

Aus der US 5,431,459 A, der US 2005/006853 A1 und der US 2002/140224 A1 sind Spannringe bekannt, die in Schachtfutter eingesetzt und nach radial außen angedrückt werden. Dabei gibt es auch Varianten, bei denen die Umfangsänderung mit Keilelementen erreicht wird. In der US 5,431,459 ist ein Keilelement umlaufseitig jeweils mit einer Nut versehen, darin ist jeweils ein entsprechendes Führungsteil angeordnet. Die Führungsteile sind in den Nuten zwar bei einem Weiten des Spannrings geführt, es gibt jedoch keinen Formschluss, der sie auch bei einem Verengen darin hält.

Der vorliegenden Erfindung liegt das technische Problem zugrunde, einen besonders vorteilhaften Spannring als Gegenstand einer Verwendung anzugeben.

Dies wird erfindungsgemäß mit der Verwendung gemäß Anspruch 1 gelöst, bei welcher der Spannring zum Andrücken nach radial außen genutzt wird. Der Spannabschnitt des Spannrings, der zur Änderung des Spannringumfangs durch Anziehen der Spannschraube in seiner Weite veränderbar ist, weist ein Keilelement und ein Führungsteil auf. Das Keilelement ist an dem Führungsteil geführt und kann in dieser Führung durch Anziehen der Spannschraube entlang einer Bewegungsstrecke bewegt werden. Diese Bewegungsstrecke liegt anteilig in einer Weitenrichtung, in welcher die Weite des Spannabschnitts genommen wird. Folglich ändert sich die Weite des Spannabschnitts und damit der Umfang des Spannrings, wenn das Keilelement durch Anziehen der Spannschraube entlang der Bewegungsstrecke bewegt wird. Das Keilelement und das Führungsteil sind dabei bezogen auf die Weitenrichtung formschlüssig zusammengehalten, greifen nämlich mit einem Hinterschnitt ineinander.

Bevorzugte Ausgestaltungen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen.

Der formschlüssige Zusammenhalt von Keilelement und Führungsteil kann vorteilhafterweise die Anwendungsmöglichkeiten des Spannrings erweitern, weil damit auch ein Verengen (Reduzieren der Weite) möglich wird. Erfindungsgemäß ist ein Formschluss derart, dass das Keilelement und das Führungsteil nicht nur bei einem Verengen des Spannabschnitts bzw. Spannrings formschlüssig aneinander geführt sind, sondern auch bei einem Weiten. Zur Illustration, soweit sich der Erfindungsgedanke im Allgemeinen bspw. auch mit zwei L-Profilen realisieren lässt, die ineinandergehakt den Hinterschnitt bilden, stellt bevorzugt eines der beiden Teile auch in entgegengesetzter Richtung eine Führungsfläche zur Verfügung. Ein entsprechender Spannring kann also sowohl zum Andrücken nach radial außen (von der Ringachse weg) als auch, jedoch nicht erfindungsgemäß, zum Andrücken nach radial innen (zur Ringachse hin) genutzt werden bzw. ausgelegt sein. Der Hinterschnitt bzw. die formschlüssige Anordnung erhöhen zwar mitunter den Aufwand bei Design und Fertigung, gleichwohl überwiegen die Vorteile.

Der Hinterschnitt zwischen Keilelement und Führungsteil besteht in einer zur Ringachse senkrechten Schnittebene betrachtet. Die "Ringachse" ist generell jene Mittenachse der Ringform, um welche umlaufend der Spannringumfang genommen wird. Der Spannring kann bspw. zumindest sektorweise drehsymmetrisch um die Ringachse sein. Die Weitenrichtung liegt senkrecht zur Ringachse; mit einer in der Weitenrichtung genommenen Änderung der Größe ("Weite") des Spannabschnitts ändert sich entsprechend der um die Ringachse umlaufend genommene Umfang. Generell beziehen sich "axial", "radial" und "umlaufend", sowie die entsprechenden Richtungen, ohne ausdrücklich gegenteilige Angabe auf die Ringachse. "Innen" und "außen" beziehen sich ohne ausdrücklich gegenteilige Angabe auf die Radialrichtungen mit der Ringachse als Mittelpunkt bzw. -linie.

Soweit davon die Rede ist, dass das Keilelement "entlang einer Bewegungsstrecke an dem Führungsteil bewegbar" ist, bezieht sich dies selbstverständlich auf das Führungsteil als "ruhendes" Bezugssystem. Würde man umgekehrt als Betrachter das Bezugssystem des Keilelements zur Referenz nehmen (als ruhend wählen), wäre das Führungsteil relativ dazu bewegt. Bezogen auf den übrigen Spannring (vom Spannabschnitt abgesehen) ruht bevorzugt das Führungsteil und wird das Keilelement bewegt. Wenngleich im Allgemeinen auch eine Bewegungsstrecke mit einer (leichten) Krümmung denkbar ist, die also nicht nur einen (anteiligen) Versatz in der Weitenrichtung, sondern zugleich auch eine (geringfügige) Relativverkippung von Keilelement und Führungsteil ergeben würde, ist eine geradlinige Bewegungsstrecke bevorzugt. Das Keilelement und das Führungsteil sind also bevorzugt nach Art eines Linearlagers aneinander geführt, besonders bevorzugt nach Art eines Lineargleitlagers (dies kann weit weniger aufwendig als eine Kugel- bzw. Wälzlagerausgestaltung sein, die im Allgemeinen aber auch denkbar ist).

Generell kann ein Vorteil des Spannabschnitts mit Keilelement in einem einerseits vergleichsweise robusten Aufbau liegen, was bspw. auf einer Baustelle, aber auch generell in der Praxis von Vorteil sein kann. Andererseits lässt sich im Design durch eine Anpassung des Winkels zwischen Bewegungsstrecke und Weitenrichtung auch vergleichsweise einfach ein gewünschtes "Übersetzungsverhältnis" einstellen. So ist bspw. bei einem kleinen Winkel der Versatz (in Weitenrichtung) groß, aber die Kraftübertragung (und dementsprechend eine erzeugbare Anpresskraft) klein, umgekehrt bei einem großen Winkel (siehe auch unten im Detail).

Bei einer bevorzugten Ausführungsform ist die Spannschraube mit ihrer Drehachse im Wesentlichen parallel zur Ringachse ausgerichtet, also um nicht mehr als 10°, 5° bzw. 2° dazu verkippt (in der Reihenfolge der Nennung zunehmend bevorzugt). Betrachtet wird hier jeweils der kleinere von zwei Winkeln, welche die beiden Achsen miteinander einschließen. Besonders bevorzugt liegen Ring- und Drehachse im Rahmen technisch üblicher Genauigkeit parallel zueinander (0°). Die Bewegungsstrecke des Keilelements setzt sich aus dem Anteil in der Weitenrichtung und einem dazu senkrechten Anteil zusammen, der dann parallel zur Drehachse der Spannschraube liegt.

Generell kann diese "axiale" Orientierung der Spannschraube insoweit von Vorteil sein, als bei der Montage von einer Stirnseite her geschraubt werden kann. Die Erfinder haben festgestellt, dass anderenfalls, wenn etwa ein Schraubendreher wie im Falle einer Spannschelle radial bzw. von einer Umfangsrichtung her an die Spannschraube gesetzt werden muss, vielfach die Raumverhältnisse beengt sind, also die Zugänglichkeit schlecht ist. Zur Illustration, der Spannring kann bspw. auf ein Rohrelement gesetzt werden, das aus einer Wand (etwa einer Gebäudewand, oder aber auch Gehäusewand etc.) hervortritt, wobei dann das Schrauben schlecht möglich ist, wenn der Spannring nahe an der Wandfläche platziert werden soll. Letzteres kann bspw. erforderlich sein, um einen insgesamt kompakten Aufbau zu realisieren; etwa im Falle einer Gebäude- bzw. Kellerwand können bspw. in einem Erdgraben die Platzverhältnisse auch besonders beengt sein. Ein wenig abstrakt ausgedrückt wird die Zugänglichkeit axial oftmals besser als seitlich sein, weil sich ja bspw. auch ein Rohrelement und/oder eine Leitung in axialer Richtung erstrecken wird, dort also ohnehin ein gewisser Raum zur Verfügung stehen muss (wie das Beispiel des Erdgrabens illustriert).

Bei einer bevorzugten Ausführungsform weist der Spannring ein Spannband auf. Dieses bildet bezogen auf einen Umlauf um die Ringachse einen Abschnitt bzw. ein Segment; es kann sich bspw. über einen Winkel von mindestens 30°, 50°, 70°, 90°, 100° bzw. 110° erstrecken. Das Spannband kann sich von dem Spannabschnitt bzw. dem Keilelement abgesehen auch vollständig umlaufend erstrecken, andererseits sind aber bspw. auch modulare Aufbauten mit mehreren Spannbändern bzw. -abschnitten denkbar (siehe unten im Detail) und können mögliche Obergrenzen bei höchstens 170°, 150° bzw. 130° liegen. Das Spannband kann bevorzugt die Form eines flachen Streifens haben, also entlang der Ringachse ( "axial") genommen eine größere Erstreckung als senkrecht zur Ringachse ("radial") haben. Das Verhältnis von axialer zur radialer Erstreckung kann bspw. mindestens 2:1, 3:1, 4:1 bzw. 5:1 betragen, wobei mögliche Obergrenzen (davon unabhängig) bspw. bei höchstens 100:1, 80:1, 60:1, 40:1 bzw. 20:1 liegen können. Letztlich kann dies auch vom Material abhängen, sodass bspw. im Falle eines Spannbands aus Kunststoff, etwa aus Polyamid (z. B. glasfaserverstärkt), die Obergrenzen tiefer liegen können, etwa bei höchstens 10:1, 8:1, 6:1 bzw. 5:1, und auch niedrige Untergrenzen denkbar sind, etwa mindestens 1:2 bzw. 1:1 (angegeben ist jeweils das Verhältnis von axialer zu radialer Erstreckung).

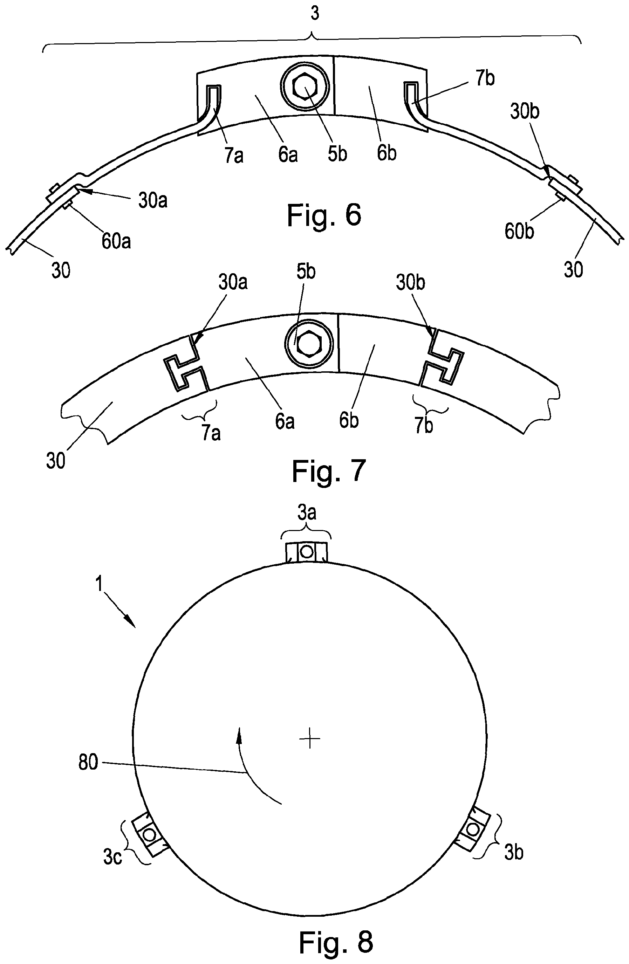

In bevorzugter Ausgestaltung ist das Führungsteil an einem Stoßende des Spannbands angeordnet. In anderen Worten erstreckt sich das Spannband also umlaufend nicht über den Spannabschnitt hinaus, deckt es also das Keilelement nicht nach radial innen bzw. außen ab. Generell können das Spannband und das Führungsteil zueinander mehrteilig vorgesehen sein, können sie also als zuvor jeweils für sich gesondert hergestellte Bauteile zusammengesetzt sein; Spannband und Führungsteil können dann bspw. miteinander verschraubt oder vernietet werden bzw. sein, vgl. auch Fig. 6 zur Illustration.

Bei einer bevorzugten Ausführungsform ist das Spannband aus Metall vorgesehen, insbesondere als Metallstreifen (vgl. die vorstehenden Angaben zur "Streifenform"). Bevorzugt bildet dann das Spannband selbst das Führungsteil und ist es dazu an dem Stoßende umgebogen. Im Allgemeinen kann das Stoßende selbst dabei auch in der Ebene bzw. Fläche des übrigen Spannbands liegen, es kann also bspw. an dem Stoßende eine sich axial erstreckende Sicke in das Band eingebogen sein. Bevorzugt ist das Stoßende selbst herausausgebogen, entweder nach radial innen eingebogen oder radial außen ausgebogen.

Die Integration von Spannband und Führungsteil kann die Zahl der Bauteile reduzieren helfen, also die Komplexität beim Zusammenbau verringern, was insbesondere in einer Massenfertigung von Vorteil sein kann. Ferner ist ein entsprechendes Biegen am bzw. Ausbiegen des Stoßendes auch an sich gut beherrscht und in der Fertigung abbildbar.

Bei einer bevorzugten Ausführungsform greift das Führungsteil zur Ausbildung des Hinterschnitts in eine Ausnehmung im Keilelement ein, stellt also das Führungsteil ein männliches und das Keilelement ein weibliches Formschlusselement dar. Generell umschließt ein weibliches Formschlusselement im vorliegenden Zusammenhang ein männliches bzw. jedenfalls einen Abschnitt davon hinsichtlich der Weitenrichtung und auch entgegengesetzt, besteht der Formschluss also sowohl beim Verengen als auch beim Weiten des Spannabschnitts bzw. Spannrings. Das weibliche Formschlusselement führt also das männliche, egal in welche Richtung der Spannschraube gedreht wird.

Bevorzugt kann sein, dass das weibliche Formschlusselement das männliche bzw. jedenfalls einen Abschnitt davon nach radial innen und zugleich radial außen einfasst, was bspw. einem unerwünschten "Aufspringen" bei der Montage oder unter Belastung vorbeugen kann. Bevorzugt bildet, wie gesagt, das Keilelement das weibliche Formschlusselement, in dem das Führungsteil aufgenommen ist (hinsichtlich der Weitenrichtung und entgegengesetzt eingefasst und bevorzugt auch nach radial innen und zugleich radial außen).

Bei einer bevorzugten Ausführungsform hat das Führungsteil die Form eines L-Profils, ist es also in zur Bewegungsstrecke senkrechten Schnittebenen betrachtet L-förmig. Es bildet dann ein Schenkel des L-Profils, der sich von dem anderen Schenkel nach radial innen oder außen weg erstreckt, den Hinterschnitt. Bevorzugt geht dann der andere Schenkel des L-Profils versatzfrei in das Keilelement über, gibt es also zwischen besagtem Schenkel und einer nach radial innen gewandten Innenwandfläche des Keilelements oder dessen nach radial außen gewandter Außenwandfläche keinen Versatz, jedenfalls im Rahmen technisch möglicher und üblicher Passungen. Das Führungsteil kann an einer Umfangsseite des Keilelements an der radial inneren Kante (versatzfrei mit Innenwandfläche) oder der radial äußeren Kante (versatzfrei mit Außenwandfläche) in das Keilelement eintreten.

Eine entsprechende Ausgestaltung kann bspw. insoweit von Vorteil sein, als sich damit ein zum Andrücken nach radial innen ausgelegter Spannring mit einer zumindest weitgehend glatten Innenwandung gestalten lässt oder ein zum Andrücken nach radial außen ausgelegter Spannring mit einer zumindest weitgehend glatten Außenwandung. In beiden Fällen wird eine gleichmäßige Kraftübertragung beim Anpressen des Spannrings unterstützt, womit sich bspw. lokalen Kraftüberhöhungen vorbeugen lässt. Wird bspw. eine Elastomer- bzw. Gummimanschette angepresst, kann einer lokalen Überbeanspruchung des Elastomermaterials vorgebeugt werden. Ferner kann die versatzfreie Gestaltung auch unerwünschten Kriechpfaden für Feuchtigkeit und dementsprechend Undichtigkeiten vorbeugen helfen.

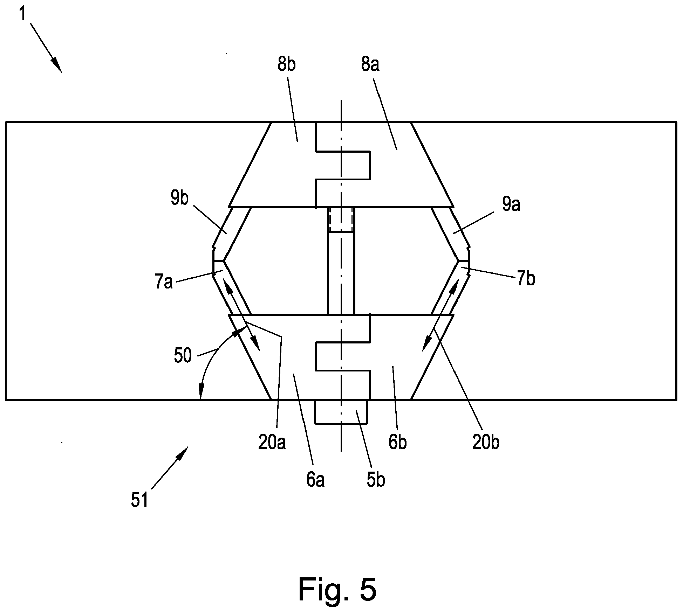

Bei einer bevorzugten Ausführungsform schließt die Bewegungsstrecke führungsteilseitig mit einer Stirnseite des Spannrings einen spitzen Winkel ein, also einen Winkel kleiner 90°. Der Winkel kann bspw. bei höchstens 80° bzw. 75° liegen, mit möglichen (davon unabhängigen) Untergrenzen bei bspw. mindestens 10° bzw. 15°. Generell meint "Stirnseite" eine axiale Stirnseite; konkret steht dann vorliegend jene der beiden axial einander entgegengesetzten Stirnseiten in Rede, zu welcher das Keilelement bei bzw. für ein Weiten hin bewegt wird. Blickt man von außen nach radial innen auf den Spannabschnitt, gibt es zwei Möglichkeiten, den Winkel zwischen dieser Stirnseite und der Bewegungsstrecke zu nehmen; vorliegend wird jener Winkel betrachtet, den die Bewegungsstrecke auf der Seite des Führungsteils mit besagter Stirnseite einschließt (dies meint "führungsteilseitig"), nicht der auf Seiten des Keilelements eingeschlossene Winkel, vgl. auch Fig. 5 zur Illustration.

Vereinfacht zusammengefasst öffnet sich also eine in Umlaufrichtung vom Führungsteil begrenzte Ausnehmung, in welcher das Keilelement angeordnet und geführt ist, axial nach außen. Im Falle eines Spannabschnitts mit einem weiteren Keilelement, das dem ersten axial entgegengesetzt an einem weiteren Führungsteil entlang einer weiteren Bewegungsstrecke geführt ist (siehe unten im Detail), können dann radial gesehen die beiden Führungsteile bzw. das Stoßende des Spannbands eine Schwalbenschwanzform haben bzw. bilden.

Generell, egal ob sich die Öffnung zur Stirnseite hin verengt oder weitet, ist bevorzugt, dass die Bewegungsstrecke mit einer zur Ringachse parallelen Achsrichtung einen Winkel von mindestens 15°, weiter und besonders bevorzugt mindestens 25° bzw. 30° einschließt. Vorteilhafte Obergrenzen, die im Allgemeinen auch unabhängig von den Untergrenzen von Interesse sein können und offenbart sein sollen, liegen bei in der Reihenfolge der Nennung zunehmend bevorzugt höchstens 75°, 65° bzw. 60°. Betrachtet wird jeweils der kleinere von zwei Winkeln, welche die Bewegungsstrecke und besagte Richtung miteinander einschließen (und die aufaddiert 180° ergeben).

Alternativ zu dem vorstehend diskutierten spitzen Winkel führungsteilseitig kann die Bewegungsstrecke auch einen stumpfen Winkel mit der Stirnseite einschließen. Die vom Führungsteil begrenzte Ausnehmung weitet sich dann also nach axial außen. Betrachtet wird in diesem Fall jene Stirnseite, zu welcher das Keilelement hinbewegt wird, um die Weite des Spannabschnitts bzw. den Umfang des Spannrings zu reduzieren.

Generell kann die Spannschraube bevorzugt ein Rechtsgewinde, also ein rechts steigendes Gewinde haben. So kann bspw. eine standardmäßig und dementsprechend auch kostengünstig verfügbare Spannschraube Einsatz finden. Bevorzugt ist der Spannring derart vorgesehen, dass, soweit er im Besonderen für ein Andrücken nach radial innen oder außen ausgelegt ist, das entsprechende Verengen (Andrücken nach innen), das keine erfindungsgemäße Verwendung darstellt, oder Weiten (Andrücken nach außen) mit einer Rechtsdrehung der Spannschraube erreicht werden kann. Dies kann für einen Monteur intuitiv gut zu handhaben sein. Dies ließe sich nun zunächst unabhängig von der Orientierung der Bewegungsstrecke erreichen, indem bedarfsweise eine Spannschraube mit Links- oder Rechtsgewinde verwendet wird. Da die Verwendung einer Spannschraube mit Rechtsgewinde bevorzugt ist, wird ein zum Andrücken nach radial innen ausgelegter Spannring bevorzugt mit einem spitzen Winkel zwischen Bewegungsstrecke und Stirnseite (führungsteilseitig) gefasst. Beim Anziehen wandert das Keilelement axial nach innen, und das Führungsteil wird zum Keilelement gezogen, die Weite verringert sich.

Bei einem zum Andrücken nach außen ausgelegten Spannring kann hingegen ein stumpfer Winkel bevorzugt sein; wandert das Keilelement beim Anziehen (Rechtsdrehen) der Spannschraube mit Rechtsgewinde nach axial innen, wird das Führungsteil in Umlaufrichtung weggedrückt, nimmt also die Weite zu.

In bevorzugter Ausgestaltung ist das Keilelement doppelkeilförmig, was sich auf die Weiten- bzw. Umfangsrichtung bezieht. Der Doppelkeil ist also an der einen Umfangsseite an dem ersten Führungsteil geführt und an der entgegengesetzten Umfangsseite an einem zweiten Führungsteil entlang einer zweiten Bewegungsstrecke. Da es sich um einen Doppelkeil handelt, ist auch diese zweite Bewegungsstrecke gegenüber der axialen Richtung verkippt, gibt es also einen Bewegungsanteil in Weitenrichtung. Im Allgemeinen wäre hingegen bspw. auch ein Keilelement denkbar, das nur an einer Umfangsseite schräg zur axialen Richtung geführt ist und an der anderen ausschließlich axial, sodass es dort mit der Bewegung in Axialrichtung keine Weitenänderung gibt.

Bei der bevorzugten Doppelkeilform sind die beiden, jeweils schrägen Bewegungsstrecken relativ zueinander so ausgerichtet, dass sich die jeweiligen Weitenänderungen aufaddieren, also dasselbe Vorzeichen haben (egal ob Zu- oder Abnahme). Bevorzugt schließen die beiden Bewegungsstrecken mit der Axialrichtung gleich große Winkel ein; bevorzugt sind die Bewegungsstrecken spiegelsymmetrisch zu einer die Ringachse beinhaltenden Spiegelebene. Bevorzugt ist auch der Doppelkeil an sich jedenfalls hinsichtlich seiner Führungsflächen, entlang welchen er an den Führungsteilen gleitet spiegelsymmetrisch aufgebaut, bevorzugt zu einer die Ringachse beinhaltenden Spiegelebene. Bevorzugt sind die Führungsteile jedenfalls in ihren Führungsflächen, an welchen der Doppelkeil geführt ist, spiegelsymmetrisch zueinander aufgebaut (bezüglich der die Ringachse beinhaltenden Spiegelebene). Generell, also auch unabhängig von etwaigen Spiegelsymmetrien, greifen idealerweise auch das zweite Führungsteil und der Doppelkeil mit einem Hinterschnitt formschlüssig ineinander (bezogen auf die Weitenrichtung bzw. entgegengesetzt).

In bevorzugter Ausgestaltung ist der Doppelkeil mehrteilig vorgesehen, nämlich aus einem ersten und einem zweiten Doppelkeilteil zusammengesetzt. Der Doppelkeil ist also insbesondere nicht als ein monolithisches, zusammenhängend aus demselben Material geformtes Teil ausgebildet, sondern aus mindestens zwei, bevorzugt genau zwei Teilen. Das erste Doppelkeilteil ist an dem ersten Führungsteil geführt, das zweite Doppelkeilteil am, das zu dem ersten Doppelkeilteil mehrteilig ist, zweiten Führungsteil. Der mehrteilige Aufbau kann bspw. insoweit von Vorteil sein, als er das Zusammensetzen, also das Ein- bzw. Auffädeln des Doppelkeils in bzw. auf die Führungsteile vereinfachen kann, insbesondere bei relativ großen Übersetzungen, also relativ weit verkippten Bewegungsstrecken. Die Doppelkeilteile können dann zunächst jeweils für sich am jeweiligen Führungsteil platziert werden (in ihrer Führung), um anschließend miteinander verbunden zu werden.

In bevorzugter Ausgestaltung durchsetzt die Spannschraube das erste und das zweite Doppelkeilteil. Es wird so vorteilhafterweise die zum Verspannen ohnehin vorgesehene Spannschraube zweifach genutzt, was die Anzahl an Einzelteilen und Komplexität reduzieren helfen kann. Im Allgemeinen wäre aber auch denkbar, das erste und das zweite Doppelkeilteil anderweitig zu verbinden, etwa mit einer gesonderten Schraube zu verschrauben oder zu vernieten.

Bei einer bevorzugten Ausführungsform weist der Spannabschnitt dem ersten Keilelement axial entgegengesetzt ein weiteres Keilelement auf. Dieses ist an einem weiteren Führungsteil geführt, ebenfalls entlang einer Bewegungsstrecke, die einen Anteil in der Weitenrichtung hat. Bevorzugt haben die Bewegungsstrecke des ersten Keilelements und jene des weiteren Keilelements in der Weitenrichtung einen gleich großen Anteil, was ein gleichmäßiges Weiten bzw. Verengen und damit Andrücken ergibt. Durch Drehen der Spannschraube können die beiden Keilelemente axial aufeinander zu bzw. auseinander bewegt werden (bevorzugt ist ein Rechtsgewinde und werden sie beim Anziehen aufeinander zu bewegt).

An dem einen Keilelement kann der Schraubenkopf der Spannschraube eine Anlage finden (jedenfalls indirekt, bspw. auch mit einer Unterlegscheibe dazwischen), auf das andere Keilelement wirkt die Spannschraube mit ihrem Gewinde. Letzteres kann mittelbar erfolgen, bspw. über eine gesondert an das Keilelement gesetzte Mutter. Bevorzugt wirkt das Gewinde unmittelbar auf besagtes Keilelement, es kann bspw. ein entsprechendes Gewinde in das Keilelement eingebracht sein. Letzteres ist aber nicht zwingend, es könnte bspw. bei einem Keilelement aus Kunststoff auch eine selbstschneidende Spannschraube Einsatz finden (das Keilelement würde dann mitunter gar keine oder jedenfalls keine Öffnung mit vorkonfektioniertem Innengewinde aufweisen).

Generell ist das weitere Keilelement bevorzugt analog dem ersten Keilelement aufgebaut, insbesondere als Doppelkeil, insbesondere mehrteilig. Bevorzugt sind das erste und das weitere Keilelement bezogen auf eine zur Ringachse senkrechte Spiegelebene, welche den Spannring axial mittig durchsetzt, hinsichtlich ihrer Bewegungsstrecken spiegelsymmetrisch. Bezüglich besagter Ebene sind bevorzugt auch die Führungsteile des einen Keilelements zu jenen des anderen spiegelsymmetrisch. Bevorzugt sind das erste und das weitere Keilelement zu einander baugleich, jedenfalls von der bzw. den Öffnungen für die Spannschraube abgesehen (diese werden in der Regel durch eine mechanische Nachbearbeitung eingebracht). Im Allgemeinen ist ein zweites Keilelement aber nicht zwingend, die Spannschraube könnte sich bspw. auch an einer an dem Spannring ortsfesten Schiene abstützen, wobei ein etwaiger Relativversatz des Keilelements in Umlaufrichtung über ein Langloch berücksichtigt werden kann.

Generell, also unabhängig davon, ob als Doppelkeil ausgebildet und/oder in Kombination mit einem weiteren Keilelement vorgesehen, kann eine Herstellung des Keilelements in einem formenden Verfahren bevorzugt sein, bei welchem also ein Formwerkzeug das Keilelement freigibt (in seiner Endform, jedenfalls von einer üblichen mechanischen Nachbearbeitung abgesehen). Ist das Keilelement bspw. aus Kunststoff vorgesehen, etwa aus Polyamid, insbesondere glasfaserverstärktem Polyamid, kann die Herstellung durch Spritzguss erfolgen. Wird das Keilelement aus einem Metall gefasst, ist ein Metallguss bzw. Feinguss möglich, etwa auch ein Aluminiumdruckguss. Bei einer Herstellung durch Spritzguss könnte dann bspw. eine Mutter (für die Spannschraube) auch als Einlegeteil umspritzt werden. Alternativ ist sowohl bei Kunststoff als auch Metall eine generative Herstellung denkbar, also durch 3D-Drucken, was aufgrund der Zugänglichkeit komplexerer Geometrien von Interesse sein kann. Bei Metall käme bspw. ein Lasersintern in Frage.

Bei einer bevorzugten Ausführungsform weist der Spannring über den Umfang verteilt eine Mehrzahl Spannabschnitte auf. Insgesamt sind dann mindestens zwei Spannabschnitte vorgesehen, es sind aber bspw. auch mindestens drei bzw. mindestens vier Spannabschnitte möglich. Obergrenzen können bspw. bei höchstens 10, 8 bzw. 6 Spannabschnitten liegen. Insbesondere im Falle eines modularen Aufbaus (siehe unten) sind aber auch weit mehr Spannabschnitte möglich und können Obergrenzen bspw. bei höchstens 30, 25 bzw. 20 Spannabschnitten liegen. Unabhängig von ihrer Anzahl sind die Spannabschnitte über den Umlauf nicht zwingend gleichmäßig verteilt, was aber hinsichtlich einer möglichst gleichmäßigen Verteilung der Anpresskraft bevorzugt sein kann. Die Positionen der Spannabschnitte können dann insbesondere um die Ringachse drehsymmetrisch zueinander sein, bevorzugt können sogar auch die Spannabschnitte drehsymmetrisch zueinander sein (nicht nur ihre Positionen).

Bei der Verwendung mehrerer Spannabschnitte kann der eingangs genannte Vorteil der guten axialen Zugänglichkeit im Besonderen zum Tragen kommen, einerseits können dann nämlich sämtliche Spannabschnitte, konkret die Spannschrauben, von derselben Richtung her gehandhabt werden (was bei einer umlaufseitigen/radialen Zugänglichkeit nicht der Fall wäre). Andererseits wäre im Falle einer solchen radialen/umfangsseitigen Zugänglichkeit bei mehreren Spannabschnitten die Wahrscheinlichkeit auch entsprechend hoch, dass ein oder einige der Spannabschnitte ungünstig nahe an bspw. einer angrenzenden Wand (in einer Ecke) oder auch einem benachbarten Rohrelement etc. liegen; dies ließe sich dann auch nicht durch Verdrehen des Spannrings merklich verbessern, weil dann wiederum andere Spannabschnitte in die ungünstige Position gebracht würden.

Bei einer bevorzugten Ausführungsform weist der Spannring mehrere Spannringsegmente auf. Dabei sind ein erstes und ein zweites Spannringsegment in Bezug auf die Umlaufrichtung (um die Ringachse) formschlüssig zusammengehalten, also mit einem Hinterschnitt. Im Unterschied zu Keilelement und Führungsteil dienen das erste und das zweite Spannringsegment jedoch nicht einer Weiten-/Umfangsänderung, sondern einem modularen Aufbau. Der Formschluss ist entsprechend derart vorgesehen, dass das erste und das zweite Spannringsegment entweder gar nicht relativ zueinander axial versetzbar sind oder aber ein etwaiger Relativversatz jedenfalls nicht die Erstreckung der zusammengesetzten Segmente in Umlaufrichtung ändert.

In einer zur Ringachse senkrechten Schnittebene betrachtet können die Spannringsegmente bspw. einem T-Profil vergleichbar ineinandergreifen. Bevorzugt ist das eine Spannringsegment dann an der entsprechenden Umfangsseite als männliches Formschlusselement ausgelegt, und das andere Spannringsegment an der zugewandten Umfangsseite als weibliches Formschlusselement. Im Allgemeinen ist auch denkbar, dass jedes der Spannringsegmente an der Verbindungsstelle jeweils sowohl ein männliches als auch ein weibliches Formschlusselement zur Verfügung stellten, sie also zueinander paarweise komplementär sind. Ein Zusammenbauen durch axiales Ineinanderschieben wäre dann gleichwohl noch möglich, wenn bspw. jedes der Segmente bezogen auf die axiale Richtung zweigeteilt wäre. Bevorzugt ist jedes der Segmente einteilig/monolithisch vorgesehen, was hinsichtlich eines insgesamt einfachen Aufbaus von Interesse sein kann.

Bevorzugt können die Spannringsegmente aus einem Kunststoff vorgesehen sein, etwa einem glasfaserverstärkten Kunststoff, wie bspw. glasfaserverstärkten Polyamid. Bevorzugt können dann auch das Keilelement und/oder das Führungsteil aus Kunststoff vorgesehen sein. Im Prinzip ist aber auch entsprechend modular aufgebauter Spannring aus Metallteilen denkbar, die dann bspw. durch Druckguss oder insbesondere hinsichtlich komplexerer Geometrien auch durch generatives Aufbauen hergestellt sein können, etwa durch Lasersintern. Unabhängig davon im Einzelnen können das erste und das zweite Spannringsegment an ihrer jeweilig der Verbindungsstelle entgegengesetzten Umfangsseite dann entweder wiederum "neutral" oder zur Führung eines Keilelements ausgelegt sein. Insgesamt kann es im gesamten Spannring dann eines oder mehrere neutrale Spannringsegmente geben, die zu beiden Umfangsseiten hin zwar formschlüssig eingebunden sind, aber keiner Weitenanpassung dienen. Ferner kann es in dem Spannring dann auch eines oder mehrere Spannringsegmente geben, die zur einen Umfangsseite hin eine verkippte Führung bilden, zur anderen Umfangsseite hin jedoch neutral sind. Insbesondere in einem modular aufgebauten Spannring kann es auch wiederum mehrere Spannabschnitte geben.

Die Erfindung betrifft auch einen Satz mehrerer Spannringe, die untereinander hinsichtlich ihrer Spannabschnitte baugleich sind. Die Spannringe können sich jedoch in einer in Umlaufrichtung genommenen Umfangslänge der jeweilig verwendeten Spannbänder unterscheiden. Es können also mit demselben, baugleichen Spannabschnitt unterschiedliche Spannringe realisiert werden, indem unterschiedlich lange Spannbänder (siehe vorne) eingesetzt werden. Dieses Baukastenprinzip eröffnet eine Variabilität, wobei der im Verhältnis zum übrigen Spannring in der Regel komplexer aufgebaute Spannabschnitt nicht eigens angepasst werden muss. Die Spannringe eines entsprechenden Satzes können auch mit vorstehend beschriebenen Spannringsegmenten gefasst werden, wobei sich in den Spannringen bevorzugt baugleiche Spannringsegmente finden, allerdings in unterschiedlicher Anzahl. So kann durch eine größere Zahl an "neutralen" Spannringsegmenten ein Spannring größerer Weite erstellt werden.

Die Erfindung betrifft die Verwendung eines vorliegend offenbarten Spannrings zum Andrücken nach radial außen. Ein erfindungsgemäßer Spannring kann für ein Andrücken in beiden Richtungen vorgesehen sein, er kann aber andererseits auch speziell für ein Andrücken nach außen ausgelegt sein, vgl. auch das Ausführungsbeispiel zur Illustration. Bevorzugt wird der Spannring gegen ein Rohrelement gedrückt, also gegen dessen Innenwandfläche (wobei er an besagter Fläche nicht anliegen muss, aber jedenfalls dagegen drückt, also hingedrückt wird). Bevorzugt kann die Ringachse dann mit einer Längsachse des Rohrelements (um welche dieses typischerweise rotationssymmetrisch ist) und/oder einer Längsachse der Leitung zusammenfallen (entlang der Längsachse wird die Länge der Leitung genommen).

Das Rohrelement kann insbesondere Teil einer Ein- oder Durchführung sein, mit welcher eine Leitung durch ein Wand- oder Bodenelement gebracht wird. Bei der Leitung kann es sich bspw. um ein Kabel oder auch Medienrohr handeln, bei der Durchführung um eine Wanddurchführung; ist diese für eine Gebäudewand ausgelegt, kann das Rohrelement baulich in diese Gebäudewand integriert sein, etwa einbetoniert. Der Spannring kann insbesondere zum Andrücken eines im Verhältnis zu dem Rohrelement weicheren Körpers genutzt werden, der zumindest abschnittsweise hülsenförmig ist, aber insgesamt auch komplex aufgebaut sein kann. Mit dem Spannring wird die (weichere) Hülse dann gegen das (härtere) Rohrelement gedrückt, gegen die Innenwandfläche.

### Kurze Beschreibung der Zeichnungen

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt:
- Figur 1: einen Spannring für eine erfindungsgemäße Verwendung in einer Schrägansicht;
- Figur 2: den Spannring gemäß Fig. 1, insbesondere dessen Spannabschnitt, in einer Ansicht von radial außen gesehen;
- Figur 3: den Spannring gemäß Fig. 1, konkret dessen Spannabschnitt, axial darauf blickend;
- Figur 4: den Spannring gemäß Fig. 1, konkret dessen Spannabschnitt, in einer Ansicht von innen nach radial außen blickend;
- Figur 5: einen weiteren Spannring für eine erfindungsgemäße Verwendung, in einer Ansicht analog jener gemäß Fig. 2;
- Figur 6: einen Spannring für eine nicht erfindungsgemäße Verwendung zur Illustration;
- Figur 7: einen weiteren Spannring für eine erfindungsgemäße Verwendung, wiederum in einer Ansicht analog jener gemäß Fig. 3;
- Figur 8: einen Spannring für eine nicht erfindungsgemäße Verwendung zur Illustration;
- Figur 9a: einen weiteren für eine erfindungsgemäße Verwendung ausgelegten Spannring bzw. Segmente davon in einer Radialansicht;
- Figur 9b: den Spannring gemäß Fig. 9a in einer Axialansicht.

### Bevorzugte Ausführungen der Erfindung

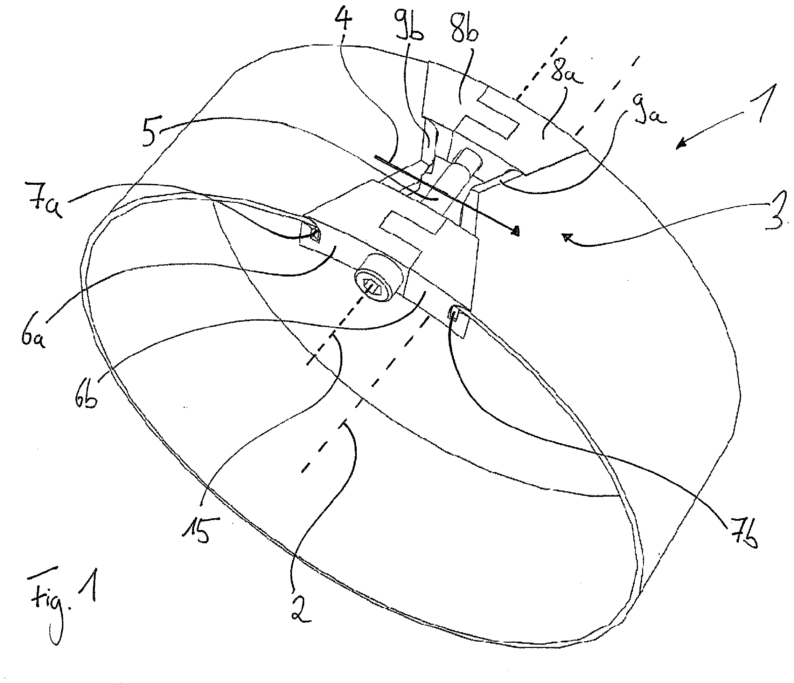

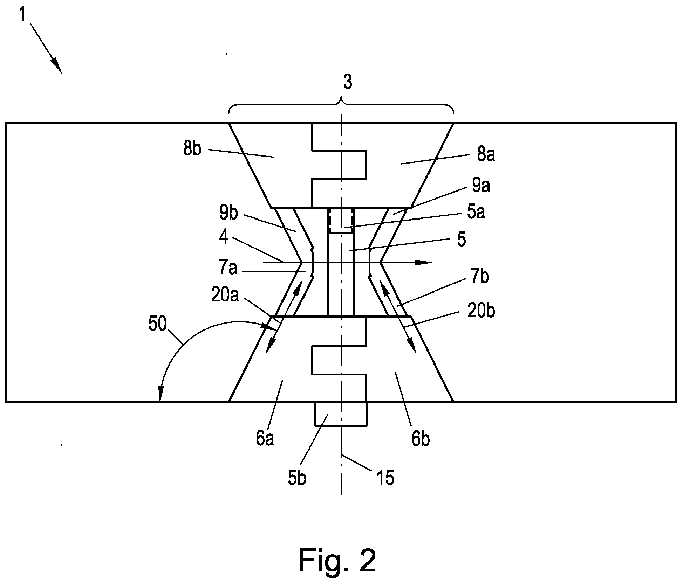

Fig. 1 zeigt einen Spannring 1 für eine erfindungsgemäße Verwendung in einer Schrägansicht, also schräg zu einer Ringachse 2 darauf blickend. Der Spannring 1 weist einen Spannabschnitt 3 auf, dessen in einer Weitenrichtung 4 genommene Weite ist durch Anziehen einer Spannschraube 5 veränderbar. Dazu weist der Spannabschnitt 3 ein Keilelement 6 auf, das an Führungsteilen 7a,b bewegbar geführt ist. Im Folgenden wird ergänzend auch auf Fig. 2 verwiesen. Das Keilelement 6 ist jeweils entlang einer Bewegungsstrecke 20a,b bewegbar am jeweiligen Führungsteil 7a,b geführt. Wie aus Fig. 2 ersichtlich, haben die Bewegungsstrecken 20a,b jeweils auch einen Anteil in Weitenrichtung 4, sodass sich mit dem axial Versetzen des Keilelements 6 auch die Weite des Spannabschnitts 3 ändert.

Vorliegend ist ein Gewinde 5a der Spannschraube 5 als Rechtsgewinde vorgesehen, sodass das Keilelement 6 beim Anziehen (Rechtsdrehen am Schraubenkopf 5b) der Spannschraube 5 in Richtung axialer Mitte des Spannrings 1 bewegt wird. Dabei werden die Führungsteile 7a,b auseinandergedrückt, der Umfang des Spannrings 1 nimmt zu. Der hier gezeigte Spannring 1 kann also insbesondere zum Andrücken nach radial außen genutzt werden. Er kann bspw. in eine Gummi- bzw. Elastomermanschette gesetzt und gemeinsam mit dieser in einem Rohrelement angeordnet sein; durch Anziehen der Spannschraube 5 wird der Umfang des Spannrings 1 geweitet und die Manschette an die Innenwandfläche des Rohrelements angedrückt.

Der Spannabschnitt 3 weist ein weiteres Keilelement 8 auf, das ebenfalls an Führungsteilen 9a,b geführt ist. Die entsprechenden Bewegungsstrecken liegen wiederum jeweils schräg zur Ringachse 2 bzw. Drehachse 15 der Spannschraube 5, sind aber der Übersichtlichkeit halber in Fig. 2 nicht eingezeichnet. Beim Anziehen der Spannschraube 5 werden die beiden Keilelemente 6, 8 axial aufeinander zubewegt, womit die Führungsteile 7a,b und 8a,b in der Weitenrichtung 4 auseinandergedrückt werden und der Umfang des Spannrings 1 erweitert wird.

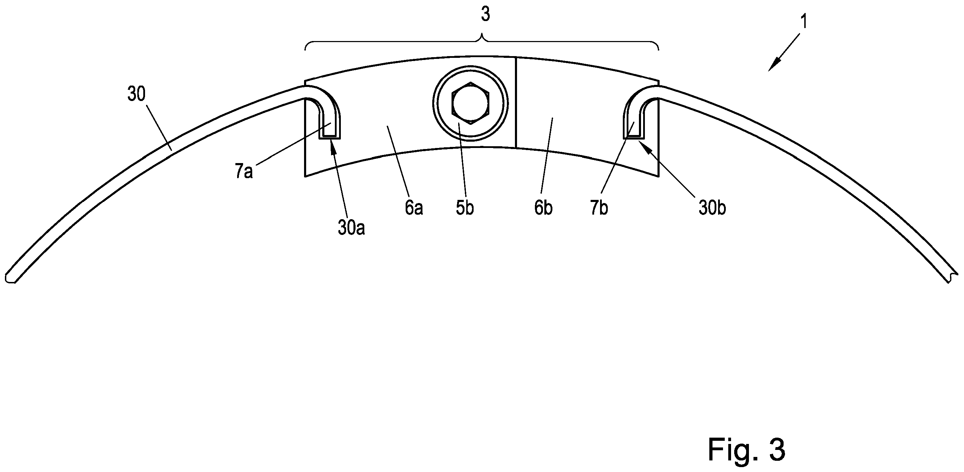

Die Keilelemente 6, 8 sind jeweils mehrteilig aufgebaut, nämlich jeweils aus einem ersten Doppelkeilteil 6a, 8a und einem zweiten Doppelkeilteil 6b, 8b. Beim Zusammensetzen des Spannabschnitts 3 werden zunächst die Doppelkeilteile 6a,b, 8a,b auf ihr jeweiliges Führungsteil 7a,b, 9a,b gefädelt, vgl. auch die Axialansicht gemäß Fig. 3 zur Illustration. Der mehrteilige Aufbau der Keilelemente 6, 8 vereinfacht dieses Auffädeln. Anschließend werden die Keilelemente 6, 8 jeweils zusammengesetzt, werden also die Doppelkeilteile 6a,b bzw. 8a,b in Umlaufrichtung ineinandergeschoben. Anschließend wird die Spannschraube 5 eingesetzt, die dann je Keilelement 6, 8 jeweils beide Doppelkeilteile 6a,b bzw. 8a,b durchsetzt und zusammenhält.

Im Folgenden wird insbesondere auf Fig. 3 verwiesen. Den vorliegenden Spannring 1 bildet über seinen wesentlichen Umfang ein Spannband 30, das aus Metall vorgesehen ist. Konkret handelt es sich um ein Stahlblech, das durch Biegen in die Ringform gebracht ist. Die Stoßenden 30a,b des Spannbands 30 sind nach radial innen eingebogen, so bildet das Spannband 30 selbst die Führungsteile 7a,b (bzw. auch 9a und 9b).

Generell, also auch bei zu dem Spannband 30 mehrteiligen Führungsteilen 7a,b (vgl. bspw. Fig. 6 zur Illustration), sind die Keilelemente 6, 8 mit den jeweiligen Führungsteilen 7, 9 jeweils mit einem Hinterschnitt formschlüssig zusammengehalten (in Bezug auf die Weitenrichtung 4). Die Keilelemente 6, 8 sind somit an den Führungsteilen 7, 9 geführt, egal ob der Spannring geweitet wird (in Fig. 2 durch Anziehen der Spannschraube 5 und aufeinander Zubewegen der Keilelemente 6, 8) oder verjüngt wird. Die Keilelemente 6, 8 können die Führungsteile 7a und 7b bzw. 9a und 9b auch in der Weitenrichtung 4 zueinander hinziehen.

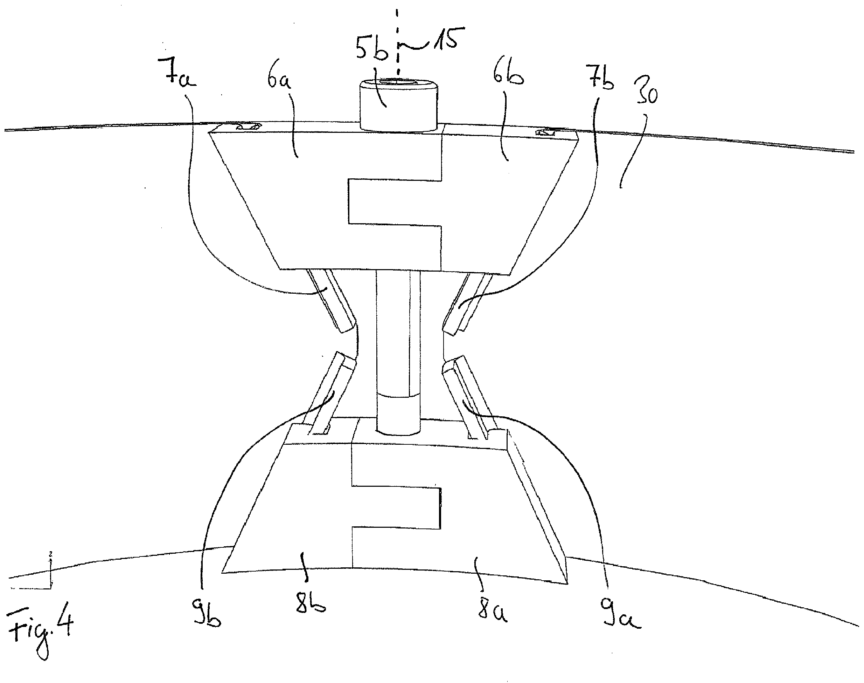

Fig. 4 zeigt nochmals denselben Spannring wie die Fig. 1 bis 3, allerdings in einer Ansicht von innen nach außen blickend, also von der Ringachse 2 weg nach radial außen. Hier ist insbesondere auch zu erkennen, wie die Führungsteile 7a,b, 9a,b durch Umbiegen des Spannbands 30 nach radial innen, also zum Betrachter hin geformt sind. Der Blick fällt in Fig. 4 auf die Stoßenden des Spannbands 30.

Fig. 5 zeigt einen weiteren Spannring 1, der dem bisher diskutierten Spannring 1 in weiten Teilen vergleichbar ist. Generell bezeichnen vorliegend dieselben Bezugszeichen Teile mit selben bzw. im Wesentlichen derselben Funktion. Zusammengefasst liegt der Hauptunterschied in der Orientierung der Bewegungsstrecken 20a,b. Im Falle der Variante gemäß Fig. 5 schließen diese außerhalb des jeweiligen Keilelements 6, 8 jeweils einen Winkel 50 mit der Stirnseite 51 des Spannrings 1 ein, der spitz ist. Axial nach außen läuft die von den Führungsteilen gebildete Führung also zu. Zum Vergleich wird auf Fig. 2 verwiesen, dort ist der Winkel 50 stumpf, entsprechend weitet sich die Führung nach axial außen.

Im Ergebnis werden bei der Variante gemäß Fig. 5, wenn die Keilelemente 6, 8 axial aufeinander zubewegt werden, die Führungsteile 7a und b bzw. 9a und b in der Weitenrichtung 4 nicht auseinandergedrückt, sondern zusammengezogen. Werden die Keilelemente 6, 8 aufeinander zubewegt, nimmt also die Weite des Spannabschnitts 3 und damit der Umfang des Spannrings 1 ab, genau invers zur Variante gemäß Fig. 2. Über die Orientierung der Bewegungsstrecken kann der Spannring 1 so gestaltet werden, dass er beim Anziehen (Rechtsdrehen) der Spannschraube 5 mit Rechtsgewinde entweder geweitet wird (Fig. 2) oder verengt wird (Fig. 5), beides ist dann mit einer Rechtsdrehung möglich.

Bei der Variante gemäß Fig. 6 bildet nicht das Spannband 30 selbst die Führungsteile 7a,b. Stattdessen sind die Führungsteile 7a,b als gesonderte Elemente an das Spannband 30 gesetzt. Mit einem jeweiligen Niet 60a,b sind die Führungsteile 7a,b am Spannband 30 befestigt, alternativ wäre aber bspw. auch ein Verschrauben oder dergleichen denkbar. In der Montage könnte bei der Variante gemäß Fig. 6 bspw. auch zunächst der Spannabschnitt 3 zusammengesetzt werden, bevor die Führungsteile 7a,b am Spannband 30 befestigt werden. Damit wäre dann auch ohne Zweiteilung des Keilelements 6 ein vereinfachtes Einfädeln möglich.

Die Variante gemäß Fig. 6 unterscheidet sich ferner insoweit von jener gemäß Fig. 3, als die L-Profile der Führungsteile 7a,b nicht nach radial innen, sondern nach radial außen orientiert sind. Dementsprechend geht bei der Variante gemäß Fig. 6 die radial innen liegende Wandfläche des Keilelements 6 glatt bzw. versatzfrei in den jeweils liegenden Schenkel des L-Profils über (nicht in den jeweilig nach außen gerichteten Schenkel). Der Spannring 1 gemäß Fig. 6 ist also insbesondere zum Andrücken nach innen geeignet, weil er dort eine gleichmäßige Übertragung der Anpresskraft ermöglicht. Zum Vergleich, bei der Variante gemäß Fig. 3 geht der jeweilig liegende Schenkel des L-Profils jeweils glatt in die nach radial außen gewandte Wandfläche des Keilelements 6 über, weswegen dieser Spannring im Besonderen zum Andrücken nach radial außen geeignet ist. Auch wenn der Spannring zum Andrücken speziell nach innen oder außen ausgelegt ist, kann es bspw. bei einer Demontage/Revision von Vorteil sein, wenn er auch in umgekehrter Richtung formschlüssig zusammengehalten ist.

Bei der Variante gemäß Fig. 7 ist das Spannband 30 nicht aus Metall vorgesehen, sondern handelt es sich um einen spritzgegossenen Kunststoffring aus glasfaserverstärktem Polyamid. Die Führungsteile 7a,b sind wiederum an dessen Stoßenden 30a,b vorgesehen, und zwar in diesem Fall als weibliche Formschlusselemente. Entsprechend bildet das Keilelement 6 männliche Formschlusselemente, im Schnitt T-förmig, welche in die Taschen der Führungsteile 7a,b eingreifen und formschlüssig gehalten sind. Die Taschen können in dem Spannring 30 bereits beim Spritzgießen berücksichtigt werden.

Generell können die Keilelemente 6, 8 aus Metall vorgesehen sein, oder aber auch aus Kunststoff spritzgegossen werden (insbesondere aus glasfaserverstärktem Polyamid), auch in Kombination mit einem Spannband aus Metall. In ihrer Funktionalität unterscheidet sich die Variante gemäß Fig. 7 nicht von den bislang diskutierten Konzepten, das Keilelement 6 und (das in Fig. 7 dahinter angeordnete Keilelement 8) werden durch Anziehen der Spannschraube 5 aufeinander zubewegt, womit, je nach Orientierung der Bewegungsstrecken (stumpfer oder spitzer Winkel, siehe vorne), die Weite entweder zu- oder abnimmt.

Fig. 8 zeigt einen weiteren Spannring 1 in schematischer Ansicht, dieser weist im Unterschied zu der Variante gemäß Fig. 1 nicht nur einen Spannabschnitt 3, sondern insgesamt drei Spannabschnitte 3a,b,c auf. Diese sind vorliegend über den Umlauf 80 äquidistant verteilt, was eine gleichmäßige Verteilung der Anpresskraft ergibt. Der schematisch dargestellte Spannring ist zum Andrücken nach radial innen ausgelegt, es lässt sich aber auch mit jeder der vorstehend diskutierten Varianten ein Spannring 1 mit Mehrfach-Verspannung (mehreren Spannabschnitten) realisieren.

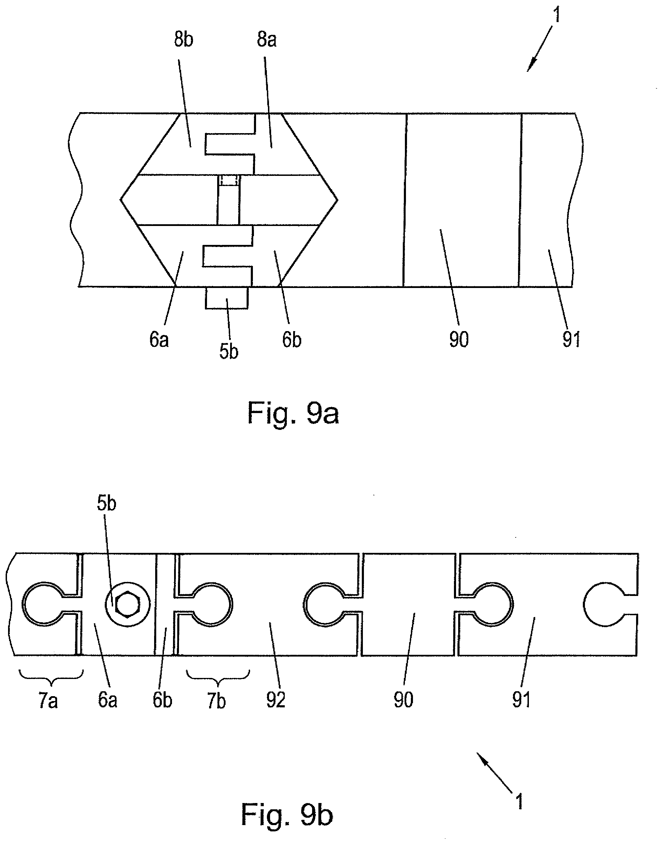

Die Fig. 9a,b zeigen einen modular aufgebauten Spannring 1 bzw. einen Ausschnitt davon. Dabei zeigt Fig. 9a eine Ansicht nach radial innen blickend, und Fig. 9b eine axiale Ansicht. Wie die bisher diskutierten Varianten weist auch dieser Spannring 1 einen Spannabschnitt 3 mit Keilelementen 6, 8 und entsprechenden Führungsteilen 7, 9 auf. Insoweit wird insbesondere auf die Erläuterungen zu Fig. 7 verwiesen.

Der Spannring 1 gemäß Fig. 9a,b ist aber auch darüber hinaus aus Modulen aufgebaut, er weist ein erstes 90 und zweites Spannringsegment 91 auf. Auch diese greifen formschlüssig ineinander, allerdings dient dieser Formschluss nur dem Zusammenhalt in Umlaufrichtung. In der vorliegenden Ausgestaltung könnten das erste 90 und das zweite Spannringsegment 91 relativ zueinander zwar axial verschoben werden, allerdings würde dies die Weite in Umlaufrichtung nicht ändern. Es gibt ferner ein drittes Formschlusselement 92, das an der einen Umfangsseite in gleicher Weise "neutral" (nicht zur variablen Weiteneinstellung) mit dem ersten Spannringsegment 90 zusammengesetzt ist. An der entgegengesetzten Umfangsseite ist das zweite Doppelkeilteil 6b jedoch analog der vorstehenden Beschreibung schräg geführt (zur Weitenanpassung).

## Patentansprüche

1. Verwendung eines Spannrings (1),
welcher Spannring (1) einen Spannabschnitt (3) aufweist,
welcher Spannabschnitt (3) ein Keilelement (6), ein Führungsteil (7a) und eine Spannschraube (5) aufweist,
wobei durch Anziehen der Spannschraube (5) eine Weite des Spannabschnitts (3) und damit ein Umfang des Spannrings (1) veränderbar ist,
wozu das Keilelement (6) an dem Führungsteil (7a) geführt und durch das Anziehen der Spannschraube (5) in dieser Führung entlang einer Bewegungsstrecke (20a) an dem Führungsteil (7a) bewegbar ist, welche Bewegungsstrecke (20a) einen Anteil in einer die Weite des Spannabschnitts (3) bestimmenden Weitenrichtung (4) hat,
wobei das Keilelement (6) und das Führungsteil (7a) mit einem Hinterschnitt derart ineinander greifen, dass sie in Bezug auf die Weitenrichtung (4) formschlüssig zusammengehalten sind,
wobei der Formschluss derart vorgesehen ist, dass das Keilelement (6) und das Führungsteil (7a) bei einem Verengen und auch bei einem Weiten des Spannabschnitts (3) formschlüssig aneinander geführt sind,
bei welcher Verwendung der Spannring (1) bezogen auf eine Ringachse (2) nach radial außen angedrückt wird.

2. Verwendung nach Anspruch 1, wobei die Spannschraube (5) des Spannabschnitts (3) mit ihrer Drehachse (15), um welche sie bei dem Anziehen rotiert, im Wesentlichen parallel zu der Ringachse (2) des Spannrings (1) ausgerichtet ist.

3. Verwendung nach Anspruch 1 oder 2, wobei der Spannring (1) mit einem Spannband (30) vorgesehen ist, das einen Abschnitt des Spannrings (1) bildet, wobei das Führungsteil (7a) an einem Stoßende (30a) des Spannbands (30) angeordnet ist.

4. Verwendung nach Anspruch 3, wobei das Spannband (30) aus Metall vorgesehen ist und selbst das Führungsteil (7a) bildet, wozu das Spannband (30) an dem Stoßende (30a) umgebogen ist und in das Keilelement (6) eingreift.

5. Verwendung nach einem der vorstehenden Ansprüche, wobei zur Ausbildung des Hinterschnitts das Führungsteil (7a) in eine Ausnehmung in dem Keilelement (6) eingreift.

6. Verwendung nach einem der vorstehenden Ansprüche, wobei das Führungsteil (7a) die Form eines L-Profils hat, welches derart in das Keilelement (6) eingreift, dass ein Schenkel des L-Profils den Hinterschnitt bildet, wohingegen der andere Schenkel des L-Profils im Wesentlichen versatzfrei in eine Wandfläche des Keilelements (6) übergeht, die bezogen auf eine Ringachse (2) nach radial innen oder radial außen gewandt ist.

7. Verwendung nach einem der vorstehenden Ansprüche, wobei sich die Bewegungsstrecke (20a) zu einer Stirnseite (51) des Spannrings (1) erstreckt, wobei bei einer Bewegung des Keilelements (6) zu dieser Stirnseite (51) hin die Weite des Spannabschnitts (3) zunimmt, und wobei die Bewegungsstrecke (20a) mit dieser Stirnseite (51) führungsteilseitig einen Winkel (50) einschließt, der spitz ist.

8. Verwendung nach einem der vorstehenden Ansprüche, wobei das Keilelement (6) doppelkeilförmig vorgesehen ist, also auch an einer dem ersten Führungsteil (7a) in der Weitenrichtung (4) entgegengesetzten Seite an einem zweiten Führungsteil (7b) des Spannabschnitts (3) entlang einer zweiten Bewegungsstrecke (20b) mit einem Anteil in der Weitenrichtung (4) bewegbar ist.

9. Verwendung nach Anspruch 8, wobei das doppelkeilförmige Keilelement (6) mehrteilig vorgesehen ist, nämlich aus einem ersten und einem zweiten Doppelkeilteil (6a, b) zusammengesetzt ist, wobei das erste Doppelkeilteil (6a) an dem ersten Führungsteil (7a) geführt ist und das zweite Doppelkeilteil (6b) an dem zweiten Führungsteil (7b) geführt ist.

10. Verwendung nach Anspruch 9, wobei die Spannschraube (5) das erste und das zweite Doppelkeilteil (6a, 6b) durchsetzt und in Weitenrichtung (4) zusammenhält.

11. Verwendung nach einem der vorstehenden Ansprüche, wobei der Spannabschnitt (3) ein weiteres Führungsteil (9a) und ein weiteres, an dem weiteren Führungsteil (9a) geführtes und in dieser Führung durch das Anziehen der Spannschraube (5) relativ bewegbares Keilelement (8) aufweist, und zwar dem ersten Keilelement (6) in Bezug auf die Ringachse (2) axial entgegengesetzt, wobei die Keilelemente (6, 8) durch das Anziehen der Spannschraube (5) relativ zueinander axial bewegbar sind.

12. Verwendung nach einem der vorstehenden Ansprüche, wobei der Spannring (1) über den Umfang verteilt eine Mehrzahl Spannabschnitte (3a, b, c) mit jeweils einem Keilelement (6), einem Führungsteil und einer Spannschraube (5) aufweist, die jeweils durch Anziehen der jeweiligen Spannschraube (5) in ihrer Weite veränderbar sind, womit der Umfang des Spannrings (1) veränderbar ist.

13. Verwendung nach einem der vorstehenden Ansprüche, wobei der Spannring (1) ein erstes (90) und ein zweites Spannringsegment (91) aufweist, welche Spannringsegmente (90, 91) bezogen auf einen Umlauf um die Ringachse (2) aufeinanderfolgend angeordnet sind und mit einem Hinterschnitt formschlüssig zusammengehalten sind, wobei der Formschluss derart vorgesehen ist, dass die Spannringsegmente (90, 91) bezogen auf die Ringachse (2) entweder relativ zueinander nicht axial versetzbar sind oder bei einem etwaigen axialen Relativversatz der Spannringsegmente (90, 91) ihre aufsummierte Erstreckung in der Umlaufrichtung unverändert bleibt.

14. Verwendung nach einem der vorstehenden Ansprüche, bei welcher der Spannring (1) gegen eine Innenwandfläche eines Rohrelements nach radial außen angedrückt wird.

15. Verwendung nach Anspruch 14, bei welcher mit dem Spannring (1) eine im Vergleich zu dem Rohrelement weicheren Hülse an das Rohrelement angedrückt wird.

## Claims

1. A use of a tensioning ring (1)
the tensioning ring (1) having a tensioning section (3),
the tensioning section (3) comprising a wedge element (6), a guide member (7a) and a tensioning screw (5),
wherein a width of the tensioning section (3) and thus a circumference of the tensioning ring (1) can be changed by tightening the tensioning screw (5),
for which purpose the wedge element (6) is guided at the guide member (7a) and is movable in this guide along a movement way (20a) at the guide member (7a) by tightening the tensioning screw (5), the movement way (20a) having a portion in a width direction (4) determining the width of the tensioning section (3),
wherein the wedge element (6) and the guide member (7a) engage in one another with an undercut in such a way that they are held together in a form-locking manner with respect to the width direction (4),
wherein the form-lock is provided such that the wedge element (6) and the guide member (7a) are held together in a form-locking manner when the tensioning section (3) is narrowed and also when it is widened,
in which use the tensioning ring (1) is pressed on radially outwards with respect to a ring axis (2).

2. The use of claim 1, wherein the tensioning screw (5) of the tensioning section (3) is aligned basically in parallel to the ring axis (2) of the tensioning ring (1) with its axis of rotation (15), about which it rotates during tightening.

3. The use of claim 1 or 2, the tensioning ring (1) having a tensioning strap (30) forming a section of the tensioning ring (1), wherein the guide member (7a) is arranged at a joint end (30a) of the tensioning strap (30).

4. The use of claim 3, wherein the tensioning strap (30) is made of metal and forms the guide member (7a), for which purpose the tensioning strap (30) is bent at the joint end (30a) and engages in the wedge element (6).

5. The use of any one of the preceding claims, wherein the guide member (7a) engages in a recess in the wedge element (6) to form the undercut.

6. The use of any one of the preceding claims, wherein the guide member (7a) has the shape of an L-profile which engages in the wedge element (6) in such a way that one leg of the L-profile forms the undercut, wherein the other leg of the L-profile forms a transition basically without an offset into a wall surface of the wedge element (6), the wall surface facing radially inwards or outwards with respect to a ring axis (2).

7. The use of any one of the preceding claims, wherein the movement way (20) extends to a front face (51) of the tensioning ring (1), wherein the width of the tensioning ring (3) increases when the wedge element (6) is moved towards this front face (51), and wherein the movement way (20) forms an angle (50) with this front face (51) on the guide member side, which angle is acute.

8. The use of any one of the preceding claims, wherein the wedge element (6) is provided in the shape of a double wedge, being also movable on a side opposite to the first guide member (7a) in the width direction (4) at a second guide member (7b) of the tensioning section (3) along a second movement way (20b) with a portion in the width direction (4).

9. The use of claim 8, wherein the double wedge-shaped wedge element (6) is provided multi-part, namely assembled from a first and a second double wedge member (6a, 6b), the first double wedge member (6a) being guided at the first guide member (7a) and the second double wedge member (6b), which is multi-part with respect to the first double wedge member (6a), being guided at the second guide member (7b).

10. The use of claim 9, wherein the tensioning screw (5) passes through the first and the second double wedge member (6a, 6b) and holds them together in the width direction (4).

11. The use of any one of the preceding claims, wherein the tensioning section (3) comprises a further guide member (9a) and a further wedge element (8) guided at the further guide member (9a) and movable with respect thereto in this guide by tightening the tensioning screw (5), namely axially opposite to the first wedge member (6) with respect to the ring axis (2), the wedge elements (6, 8) being movable relative to one another by tightening the tensioning screw (5).

12. The use of any one of the preceding claims, the tensioning ring (1) comprising a plurality of tensioning sections (3a,b,c) distributed over the circumference, each having a wedge element (6), a guide member and a tensioning screw (5), wherein the width of each tensioning section can be varied by tightening the respective tensioning screw (5), whereby the circumference of the tensioning ring (1) can be changed.

13. The use of any one of the preceding claims, the tensioning ring (1) comprising a first (90) and a second tensioning ring segment (91), the tensioning ring segments (90, 91) being arranged consecutive with respect to a circumference around the ring axis (2) and being held together in a form-fit manner with an undercut, wherein the form-fit is provided such that the tensioning ring segments (90, 91), with respect to the ring axis (2), are either not axially displaceable relative to one another or that, in case of an axial relative displacement of the tensioning ring segments (90, 91), their total extension in the circumferential direction remains unchanged.

14. The use of any one of the preceding claims, wherein the tensioning ring (1) is pressed on radially outwards against an inner wall surface of a tube element.

15. The use of claim 14, wherein a sleeve which is softer than the tube element is pressed against the tube element with the tensioning ring (1).

## Revendications

1. Utilisation d'un collier de serrage (1),
lequel collier de serrage (1) présente une section de serrage (3), laquelle section de serrage (3) présente un élément en forme de coin (6), une partie de guidage (7a) et une vis de serrage (5),
dans le cadre de laquelle utilisation un serrage de la vis de serrage (5) permet de modifier la largeur de la section de serrage (3) et ainsi la circonférence du collier de serrage (1),
ce pour quoi l'élément en forme de coin (6) est guidé sur la partie de guidage (7a) et est déplaçable, sous l'effet du serrage de la vis de serrage (5), dans ce guidage le long d'une voie de déplacement (20a) présente sur la partie de guidage (7a), ladite voie de déplacement (20a) possédant une partie dans une direction de largeur (4) définissant la largeur de la section de serrage (3),
dans laquelle l'élément en forme de coin (6) et la partie de guidage (7a) s'emboîtent l'un dans l'autre avec une contre-dépouille de façon à être retenus ensemble par complémentarité de forme par rapport au sens de la largeur (4),
dans laquelle la complémentarité de forme est prévue de telle manière que l'élément en forme de coin (6) et la partie de guidage (7a) sont guidés par complémentarité de forme l'un contre l'autre aussi bien lors d'un rétrécissement que d'un élargissement de la section de serrage (3),
et dans le cadre de laquelle utilisation le collier de serrage (1) subit une pression radialement vers l'extérieur par rapport à un axe (2) du collier.

2. Utilisation selon la revendication 1, dans laquelle la vis de serrage (5) de la section de serrage (3) est dirigée, par son axe de rotation (15), sur lequel elle tourne lors du serrage, de manière sensiblement parallèle à l'axe (2) du collier de serrage (1).

3. Utilisation selon la revendication 1 ou 2, dans laquelle le collier de serrage (1) est doté d'un bandeau de serrage (30) formant une section du collier de serrage (1), ladite partie de guidage (7a) étant disposée à une extrémité jointive (30a) du bandeau de serrage (30).

4. Utilisation selon la revendication 3, dans laquelle le bandeau de serrage (30) est prévu en métal et forme lui-même la partie de guidage (7a), ce pour quoi le bandeau de serrage (30) est replié au niveau de l'extrémité jointive (30a) et pénètre dans l'élément en forme de coin (6).

5. Utilisation selon l'une des revendications précédentes, dans laquelle la partie de guidage (7a) pénètre dans un évidement présent dans l'élément en forme de coin (6) afin de former la contre-dépouille.

6. Utilisation selon l'une des revendications précédentes, dans laquelle la partie de guidage (7a) a la forme d'un profil en L qui s'emboîte avec l'élément en forme de coin (6) de telle manière qu'une patte du profil en L forme la contre-dépouille, et l'autre patte du profil en L passe en revanche de manière sensiblement fluide à une surface de paroi de l'élément en forme de coin (6) tournée radialement vers l'intérieur ou l'extérieur par rapport à un axe (2) du collier.

7. Utilisation selon l'une des revendications précédentes, dans laquelle la voie de déplacement (20a) s'étend vers une face frontale (51) du collier de serrage (1), la largeur de la section de serrage (3) augmentant lors d'un déplacement de l'élément en forme de coin (6) vers ladite face frontale (51) et la voie de déplacement (20a) formant un angle (50) aigu avec ladite face frontale (51) du côté de la partie de guidage.

8. Utilisation selon l'une des revendications précédentes dans laquelle l'élément en forme de coin (6) est prévu en double coin, et est donc également déplaçable au niveau d'un côté, opposé à la première partie de guidage (7a) dans le sens de la largeur (4), sur une deuxième partie de guidage (7b) de la section de serrage (3), le long d'une deuxième voie de déplacement (20b) possédant une partie dans le sens de la largeur (4).

9. Utilisation selon la revendication 8, dans laquelle l'élément en forme de coin (6) en double coin est constitué de plusieurs parties, à savoir une première et une deuxième partie en forme de double coin (6a, b), ladite première partie en forme de double coin (6a) étant guidée sur la première partie de guidage (7a) et la deuxième partie en forme de double coin (6b) étant guidée sur la deuxième partie de guidage (7b).

10. Utilisation selon la revendication 9, dans laquelle la vis de serrage (5) traverse la première et la deuxième partie en forme de double coin (6a, 6b) et les retient ensemble dans le sens de la largeur (4).

11. Utilisation selon l'une des revendications précédentes, dans laquelle la section de serrage (3) présente une autre partie de guidage (9a) et un autre élément en forme de coin (8) guidé sur l'autre partie de guidage (9a) et déplaçable relativement dans ce guidage sous l'effet du serrage de la vis de serrage (5) en étant axialement opposé au premier élément en forme de coin (6) par rapport à l'axe (2) du collier, les éléments en forme de coin (6, 8) étant déplaçables axialement l'un par rapport à l'autre sous l'effet du serrage de la vis de serrage (5).

12. Utilisation selon l'une des revendications précédentes, dans laquelle le collier de serrage (1) présente, répartis sur sa circonférence, une pluralité de sections de serrage (3a, b, c) respectivement dotées d'un élément en forme de coin (6), d'une partie de guidage et d'une vis de serrage (5), lesquelles ont une largeur respective modifiable sous l'effet du serrage de leur vis de serrage (5) respective, ce qui permet de modifier la circonférence du collier de serrage (1).

13. Utilisation selon l'une des revendications précédentes, dans laquelle le collier de serrage (1) présente un premier (90) et un deuxième (91) segment de collier de serrage, lesquels segments de collier de serrage (90, 91) sont disposés les uns à la suite des autres eu égard à une rotation autour de l'axe (2) du collier et sont retenus ensemble par complémentarité de forme avec une contre-dépouille, ladite complémentarité de forme étant prévue de manière que les segments de collier de serrage (90, 91), par rapport à l'axe (2) du collier, ne puissent pas être décalés axialement les uns par rapport aux autres ou bien de manière que, en cas de décalage axial relatif éventuel des segments de collier de serrage (90, 91), leur étendue cumulée demeure inchangée dans le sens de la rotation.

14. Utilisation selon l'une des revendications précédentes, dans laquelle le collier de serrage (1) est pressé radialement vers l'extérieur contre une surface de paroi intérieure d'un élément tubulaire.

15. Utilisation selon la revendication 14, dans laquelle le collier de serrage (1) permet de presser un manchon plus mou que l'élément tubulaire sur ledit élément tubulaire.
